# EUROPÄISCHE PATENTSCHRIFT

(11) **EP 0 329 007 B1**
(45) Veröffentlichungstag und Bekanntmachung des Hinweises auf die Patenterteilung: **02.11.1994**
(21) Anmeldenummer: 89102191.7
(22) Anmeldetag: 09.02.1989
(51) Int. Cl.: B23Q 7/14, A43D 111/00

(54) **Transferstrasse**
Transfer line
Ligne de transfert

(30) Priorität: 13.02.1988 DE 3804583
(43) Veröffentlichungstag der Anmeldung: 23.08.1989
(73) Patentinhaber: PSB GMBH FÖRDERANLAGEN UND LAGERTECHNIK, 66955 Pirmasens (DE)
(72) Erfinder: Kuwertz, Erich, D-6751 Trippstadt (DE); Schäfer, Herbert, Dipl-Ing., D-6788 Vinningen (DE); Draut, Hans Friedrich, Dipl-Ing., D-7140 Ludwigsburg-Hoheneck (DE)
(74) Vertreter: Patentanwälte Möll und Bitterich

(56) Entgegenhaltungen:
- EP-A- 0 009 422
- DE-A- 442 486
- DE-A- 3 418 918
- DE-C- 713 389
- FR-A- 2 267 262
- FR-A- 2 269 840
- FR-A- 2 558 692
- US-A- 2 473 595
- US-A- 2 850 749
- US-A- 3 668 728
- US-A- 3 961 390

## Beschreibung

Die Erfindung betrifft eine Transferstraße gemäß dem Oberbegriff des Patentanspruchs 1.

Eine derartige Transferstraße, die speziell auf den Einsatz in der Schuhfabrikation abgestimmt ist, ist bekannt aus der EP-A-0 009 422. Diese besitzt eine endlos umlaufende, in zwei Etagen übereinander geführte Förderstrecke, entlang der sechs verschiedene Vorrichtungen, Maschinen und Maschinengruppen positioniert sind, mit deren Hilfe teils manuell, teils halbautomatisch, teils vollautomatisch alle Verfahrensschritte zur Herstellung eines Schuhs ausgeführt werden, beginnend mit dem Befestigen der Brandsohle auf dem Leisten über das Zwicken der Schäfte an Spitze, Seite und Ferse, über das Schärfen und Rauhen des Zwickeinschlags, das Zementieren von Schuhboden und Laufsohle, das Ankleben der Sohle bis hin zum Ausleisten des fertigen Schuhs. Auf der Förderstrecke laufen Förderplattformen in Form einer Trägerplatte, auf der zwei Befestigungsvorrichtungen für Leisten und zwei Bereiche zum Ablegen von Laufsohlen vorgesehen sind. Darüber hinaus sind auf der Plattform noch zwei Nocken zur Markierung des rechten und linken Schuhs vorgesehen sowie zwei Stifte zur Steuerung der Bearbeitungsmaschinen.

Eine andere Transferstraße für die Schuhfabrikation ist bekannt aus der DE-A-35 38 721. Sie besitzt eine endlose Förderstrecke, auf der eine Anzahl von Schuhleisten im Kreis gefördert wird. An einem ersten Handarbeitsplatz werden die Schuhschäfte eingeleistet und zu einer Übertragungsstation gefördert, wo die Leisten von den Förderplatten getrennt und von einem Roboter auf einen Gießtisch für Kunststoffsohlen aufgesetzt werden. Die Leisten mit den fertigen Sohlen werden vom Roboter wieder auf die Förderplatten zurückgesetzt. An einem weiteren Handarbeitsplatz werden die Schuhe ausgeleistet. Die überwachung und Steuerung von Gießtisch, Roboter und Förderstrecke kann durch eine elektronische Datenverarbeitungsanlage erfolgen.

Bei der Herstellung von Schuhen ist es kaum möglich, die Einzelteile in genau passenden Einzelteilbehältern zu den Arbeitsstationen zu transportieren. Schuhe müssen vielmehr auf einem Leisten, der für die Größe und die Form des fertigen Schuhs verantwortlich ist, in einer Vielzahl von Arbeitsschritten hergestellt werden. Die dabei verwendeten Einzelteile sind natürlicher Herkunft; Dicke, Größe, Form, Festigkeit usw. sind praktisch nicht normierbar.

Der vorliegenden Erfindung liegt die Aufgabe zugrunde, eine Transferstraße der eingangs genannten Art anzugeben, die flexibel auf die verwendeten Vorrichtungen und insbesondere die individuell verwendeten Materialien reagiert, leicht an unterschiedliche Anforderungen anpaßbar ist und optimale Voraussetzungen für die Überwachung und Steuerung mit einer elektronischen Datenverarbeitungsanlage bietet.

Diese Aufgabe wird gelöst durch eine gattungsgemäße Transferstraße mit den Merkmalen gemäß Kennzeichen des Patentanspruchs 1..

Wesentlicher Vorteil der erfindungsgemäßen Transferstraße ist, daß die Förderplattformen, an denen Leisten und Schuh lösbar befestigt sind, aus der Förderstrecke ausgeschleust, Leisten und Schuh in bewährten Schuh-Bearbeitungsmaschinen bearbeitet und anschließend in die Förderstrecke wieder eingeschleust werden können. Dadurch ist es möglich, entlang der Förderstrecke Staustrecken einzurichten, beispielsweise um an Handarbeitsplätzen eine Anpassung an die variable menschliche Arbeitsleistung sowie an die Bestimmungen der Arbeitszeitverordnung zu ermöglichen oder aber flexibel auf Störungen des Betriebsablaufes reagieren zu können.

Der wesentliche Vorteil der Erfindung liegt jedoch darin, daß die Förderplattformen millimetergenau positioniert und auch die bei der Arbeit entstehenden großen Kräfte aufgefangen werden können. Auch werden dank der besonderen Ausgestaltung der Verbindungsklammern Spitzen- und Fersenstück eines Scharnierleistens auch dann in ihrer Idealposition gehalten, wenn das Gelenk des Leistens ausgeleiert sein sollte.

Gemäß einer vorteilhaften Weiterbildung der Erfindung sind entlang der Förderstrecke Einrichtungen angeordnet, die die Förderplattformen um ihre Hochachse drehen können.

Wie schon erwähnt, sind an bzw. unter der Förderstrecke an den jeweiligen Bearbeitungsstationen Einrichtungen vorgesehen, um die Förderplattform, den Leisten, die Verbindung zwischen Förderplattform und Leisten oder auch die Schuhe selbst manipulieren zu können. Gemäß einer vorteilhaften Ausgestaltung der Erfindung dienen zum Lösen oder Fixieren der Verbindungsklammern zwischen Förderplattform und Leisten geeignet profilierte, heb- und senkbare Formstücke.

Zur Manipulation des Leistens können gemäß einer Weiterbildung der Erfindung Einrichtungen in Form von heb- und senkbaren sowie öffen- und schließbaren Zangen vorgesehen sein. Um die Lage des Schuhs auf dem Leisten verändern zu können, können an den Bearbeitungsstationen auch noch Einrichtungen in Form von hebbaren, senkbaren und/oder schwenkbaren Hebeln vorgesehen sein.

Alle diese Einrichtungen werden vorzugsweise über Pneumatikzylinder betätigt.

Gemäß einer Ausgestaltung der Erfindung ist die Förderstrecke in mehrere Teilstrecken unterteilt, die mit unterschiedlichen Geschwindigkeiten laufen. So wird beispielsweise in Erwärmungs- und Kühlstrecken die Fördergeschwindigkeit gering, in den reinen Transportstrecken hoch gewählt.

Vorzugsweise ist die Förderstrecke als Kettenförderer ausgebildet. Kettenförderer sind robust. Vor allem aber besteht zwischen den Ketten genügend Platz, um die Förderplattformen, Leisten und/oder Schuhe mit Hilfe der an bzw. unter der Förderstrecke montierten Einrichtungen manipulieren zu können.

Gemäß einer Weiterbildung der Erfindung laufen die Ketten und die Förderplattformen zwischen U-förmigen Profilschienen, gegen die die Förderplattformen angepreßt werden können. Dadurch wird eine sichere Fixierung erreicht; gleichzeitig wird die Verbindung zwischen Ketten und Förderplattform gelöst und die Abnutzung der Ketten reduziert.

Da es bei den erfindungsgemäßen Transferstraßen möglich ist, an jeder beliebigen Stelle Förderplattformen mit Leisten und/oder Schuhen zu entnehmen oder aufzusetzen, sind an wichtigen Bearbeitungsstationen Code-Leser angeordnet, die dem jeweiligen Bearbeitungsgerät - externe Maschine, Roboter, integrierte Bearbeitungsstation - das jeweilige Werkstück melden. Anhand dieser Angaben kann das Werkstück individuell und optimal bearbeitet werden.

Damit verbunden ist die vorteilhafte Möglichkeit, die Förderstrecke mit Umgehungsstrecken, Kurzschlußstrecken und/oder Räumstrecken, z. B. mit Senkrechtförderern, auszurüsten. Auch ist es durchaus möglich, Förderplattformen mit Leisten und/oder Schuhen von vorgeschalteten Transferstraßen zu übernehmen und an nachgeschaltete Transferstraßen weiterzugeben.

Die Anforderungen der Schuhindustrie an Transferstraßen sind außerordentlich hoch, da beim heutigen Stand der Technik eine Reihe von Arbeitsvorgängen, beispielsweise das Zwicken der Schaftspitze, manuell, eine Reihe von Vorgängen, beispielsweise das Zwicken an Seite und Ferse, in speziellen Sondermaschinen, andere Bearbeitungsvorgänge mit Hilfe von Robotern und wieder andere Bearbeitungsschritte mit einfachen Maschinen oder in Durchlaufstationen ausgeführt werden können. Hier ermöglicht das erfindungsgemäße Konzept der Transferstraße die optimale Anpassung an die technischen Gegebenheiten und Möglichkeiten.

Anhand der Zeichnung soll die Erfindung in Form von Ausführungsbeispielen näher erläutert werden. Es zeigen
- Fig. 1: einen Teil-Querschnitt durch eine Förderstrecke im Bereich einer Bearbeitungsstation,
- Fig. 2: einen Querschnitt durch eine Förderplatte mit aufgesetztem Leisten,
- Fig. 3: eine Draufsicht auf einen Abschnitt einer Transferstraße mit einer Reihe von gestauten Förderplatten,
- Fig. 4: eine Draufsicht auf eine Transferstraße der Schuhindustrie bei der Herstellung von Schuhen mit vorgefertigten Sohlen und
- Fig. 5: eine Draufsicht auf eine Transferstraße der Schuhindustrie bei der Herstellung von Schuhen mit angegossenen Sohlen.

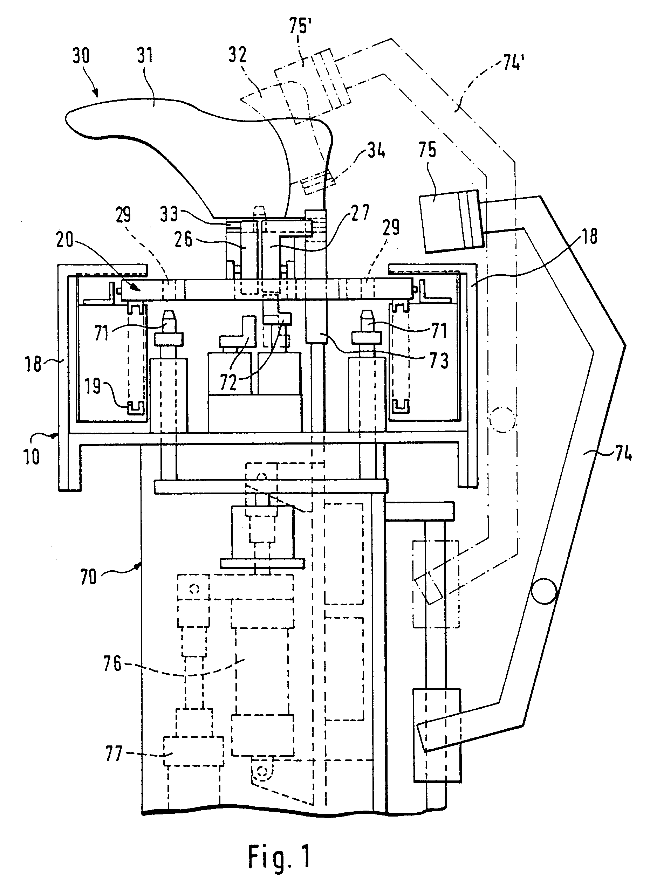

Fig. 1 zeigt einen Querschnitt durch eine Förderstrecke 10 einer Transferstraße im Bereich einer Bearbeitungsstation 70. Man erkennt seitlich zwei U-förmige Stahlprofile 18, zwischen denen je eine endlose Förderkette 19 läuft.

Das von den Förderketten 19 transportierte Fördergut besteht aus Förderplatten 20 mit je einem daran lösbar befestigten Schuhleisten 30. Das eigentliche Werkstück, der Schuhschaft bzw. Schuh, ist nicht gesondert dargestellt, um die Übersichtlichkeit zu wahren.

An bzw. unter der Förderstrecke 10 sind eine Reihe von Einrichtungen montiert, die die Bearbeitungsstation 70 bilden. Es handelt sich dabei zunächst um heb- und senkbare Justierstifte 71 zur Feinjustierung, die in entsprechende Justierbohrungen 29 in der Leistenträgerplatte 21 eingefahren werden können. An den Justierstiften 71 sind gleichzeitig Konsolen angeordnet, so daß beim Hochfahren derselben die Leistenträgerplatte 21 angehoben und gegen das U-förmige Profil 18 angepreßt wird. Auf diese Weise bekommen Förderplatte 20 und Leisten 30 eine millimetergenaue Fixierung und Justierung in allen Ebenen.

Zur Grobjustierung sind Anschläge 79 vorgesehen, die von unten hochgefahren werden, so daß die Vorderkante der Förderplattform 20 dort anlaufen kann. Die Förderplattformen 20 haben an den Stirnseiten Ausnehmungen 24, damit durch wechselseitig hochfahrbare Anschläge 79, 79' eine Vereinzelung der Förderplattformen 20 aus einer Staustrecke erfolgen kann.

Der Leisten 30 ist, wie schon erwähnt, mit der Leistenträgerplatte 21 lösbar verbunden. Die Verbindung wird bewirkt über zwei Verbindungsklammern 26, 27, die unter der Wirkung von Federn 36 in Schließstellung gehalten sind. Um diese Klammern 26, 27 öffnen oder auch bei Bedarf fester schließen zu können, sind in der Bearbeitungsstation 70 spezielle Formstücke 72 heb- und senkbar angeordnet.

Um die Schuhe bequem ein- und ausleisten zu können, besitzen die Leisten (30) ein Spitzenstück 31 und ein Fersenstück 32, die mittels eines Federscharniers verbunden sind. Zur Befestigung des Leistens 30 auf der Förderplattform 20 sind an Spitzen- und Fersenstück 31, 32 Halteplatten 33, 34 montiert. In diese greifen die an der Förderplattform 20 befestigten Verbindungsklammern 26, 27 ein. Dabei handelt es sich bei der einen Verbindungsklammer 26 um eine sogenante Vorklammer, die nur die Halteplatte 33 des Spitzenstücks 31 erfaßt. Die Hauptklammer 27 dagegen ergreift die Halteplatten 33, 34 von Spitzen- und Fersenstück 31, 32 gleichzeitig. So erhält der Leisten (30) auch dann die gestreckte Sollposition, wenn das Federscharnier ausgeleiert sein sollte.

Um das Fersenstück 32 des Leistens 30 bewegen zu können, ist in der Bearbeitungsstation 70 eine heb- und senkbare sowie öffen- und schließbare Zange 73 angeordnet, die mit der Halteplatte 34 des Fersenstücks 32 zusammenwirkt.

Um den fertigen Schuh vom Leisten 30 leicht abnehmen zu können, ist im Bereich der Bearbeitungsstationen 70 neben der Förderstrecke 10 ein Auswerfer 74 mit einem Gummikissen 75 angeordnet.

Alle Einrichtungen sind in dem dargestellten Ausführungsbeispiel über Pneumatikzylinder 76, 77 betätigt. Diesen sind (in der Zeichnung nicht dargestellt) Magnetventile vorgeschaltet, die von der Datenverarbeitungsanlage 100 geschaltet werden.

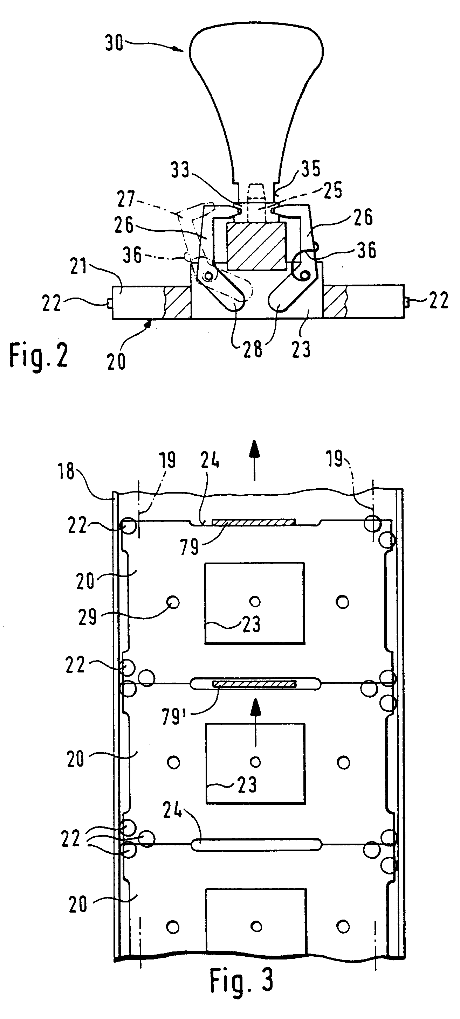

Fig. 2 zeigt einen Querschnitt durch die Förderplattform 20 und den Leisten 30. Man erkennt die beiden Verbindungsklammern 26, 27, die in die Halteplatten 33, 34 am Leisten 30 eingreifen. Man erkennt ferner eine Aussparung 35; in diese greift die Zange 73 zur Manipulation des Fersenstücks 32 des Leistens 30 ein.

Die Verbindungsklammern 26, 27 werden durch Federn 36 in der Schließstellung gehalten. Um die Verbindung öffnen oder bei Bedarf noch fester fixieren zu können, sind die Verbindungsklammern 26, 27 als zweiarmige gekröpfte Hebel ausgebildet. Durch geeignete Formgebung der heb- und senkbaren Formstücke 72 lassen sich die unteren Hebelarme 28 entweder spreizen oder aneinander annähern, wobei die oberen Hebelarme dann die entsprechende Gegenbewegung ausführen.

Führungsrollen 22 an allen Seiten der Leistenträgerplatte 21 sorgen für einen reibungslosen Lauf der Förderplattform 20 durch die Förderstrecke 10.

Fig. 3 zeigt eine Draufsicht auf einen Abschnitt einer Förderstrecke 10 im Bereich einer Staustrecke. Die vorderste Förderplattform 10 ist gegen einen heb- und senkbaren Anschlag 79 gelaufen und wird durch die Friktion der Ketten 19 sowie die nachfolgenden Förderplattformen 20 angepreßt und grob justiert. Die Feinjustierung erfolgt mittels der Justieröffnungen 29.

Die Förderplattformen 20 besitzen an Vorder- und Hinterkante je eine Aussparung 24. Dadurch können weitere Anschläge 79' zwischen die Förderplattformen 20 gefahren werden, um diese zu vereinzeln.

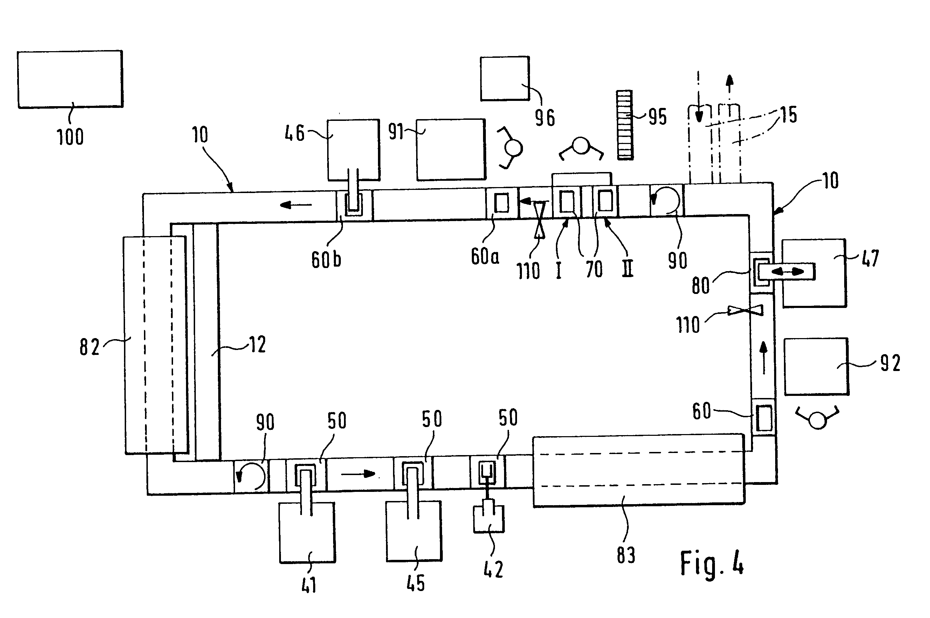

Fig. 4 zeigt schematisch eine Draufsicht auf eine erste Transferstraße für die Schuhherstellung. Der Arbeitsablauf beginnt bei der mit der Position I gekennzeichneten Stelle der Förderstrecke 10. Hier entnimmt eine Bedienungsperson Brandsohlen aus einem Regal 95 und heftet sie halbautomatisch auf einen Zwickleisten. Förderplattform, Leisten und Schuhschaft werden auf der Förderstrecke 10 in Pfeilrichtung zur nächsten Bearbeitungsstation 60 transportiert. Die Bearbeitungsstation 60 ist mit einer Einrichtung ausgerüstet, die die Verbindung zwischen Leistenträger 20 und Leisten 30 lösen und wieder herstellen kann. Im Bereich der Bearbeitungsstation 60 erkennt man einen handbedienten Spitzen-Zwickautomaten 91. Die Schäfte werden in einem Schaftlager 96 bereitgestellt.

Beim Weitertransport gelangt die Einheit aus Förderplattform, Leisten und an der Spitze gezwicktem Schuhschaft zu einer weiteren Bearbeitungsstation 60, wo die Verbindung zwischen Leistenträger und Leisten gelöst wird. Leisten und Schuhschaft werden einer Bearbeitungsstation 46 zugeführt, wo Seite und Ferse maschinell gezwickt werden. Ein der Bearbeitungsstation 60a zugeordneter Code-Leser 110 teilt den Zwickmaschinen 91 und 46 mit, welche Art von Schuh bezüglich Form, Größe und Modell jeweils zu bearbeiten ist.

Die gezwickten Schuhschäfte werden dann mit Hilfe der Förderst recke 10 durch eine in die Förderstrecke integrierte Bearbeitungsstation 82, hier eine Heiz- oder Stabilisierstrecke, gefördert. Parallel zur Heizstrecke 82 ist eine Umgehungsstrecke 12 angeordnet. Hinter der Heizstrecke 82 gelangen die Förderplattformen 20 mit Leisten 30 und Schuhschaft zu einer Station 90, wo sie angehoben und um 180 Grad gedreht werden. So vorbereitet für die nachfolgende Bearbeitung mittels Vollautomaten und/oder Robotern 41, 45, 42 werden die Förderplattformen 20 an den Bearbeitungsstationen 50 jeweils angehalten, justiert und fixiert. Es folgen das Rauhen des Randes mittels Roboter 41, das Rauhen des Zwickeinschlags mittels Automat 45 und das Zementieren mittels Automat oder Roboter 42.

Nach Durchlaufen einer in die Förderstrecke 10 integrierten Klebstoff-Ablüftstrecke 83 werden die Förderplattformen 20 an einer weiteren Bearbeitungsstation 60 angehalten und fixiert. Nach Lösen der Verbindung wird der Leisten 30 abgenommen und an einem Handarbeitsplatz 92 eine Fertigsohle aufgesetzt. Diese Arbeit kann auch ohne Entnahme des Leistens direkt an der Transferstrecke in der Bearbeitungsstation 60 erfolgen.

Schließlich gelangt die Einheit aus Förderplattform, Leisten und Schuh zu einer Übergabestation 80. Hier werden die Förderplattformen aus der Förderbahn 10 ausgeschleust und zu einer automatischen Sohlenanpreßmaschine 47 transportiert. Auch dieser wird der Typ des jeweils zu bearbeitenden Schuhmodells über einen Code-Leser 110 mitgeteilt.

Nach Befestigung der Sohle wird die Einheit aus Förderplattform, Leisten und Schuh wieder in die Förderstrecke 10 eingeschleust, an einer Drehstation 90 gedreht und gelangt zu einer Bearbeitungsstation 70. Hier wird das Fersenstück des Leistens verschoben und der Leisten verkürzt. Gleichzeitig wird mit Hilfe des Auswerfers 74, 75 die Schuhferse abgeschoben, so daß die Bedienungsperson den fertigen Schuh bequem ausleisten kann.

Alternativ dazu kann der Schuh auch über eine Verbindungsstrecke 15 aus der Förderstrecke 10 ausgeschleust und weiteren Stationen zugeführt werden.

Jeder der Bearbeitungsstationen 50, 60, 70, 80, 90 kann eine Staustrecke vorgeschaltet sein. Dadurch lassen sich Transportgeschwindigkeit und Arbeitsgeschwindigkeit von Maschinen und Menschen problemlos in Einklang bringen.

Die übergeordnete Datenverarbeitungsanlage 100 wird von den verschiedenen Stationen mit Arbeits- und Materialdaten versorgt. Gleichzeitig versorgt sie die verschiedenen Maschinen und Förderbahnen mit Informationen. Beispielsweise lassen sich auf diese Weise die Vollautomaten und die Roboter 41, 42, 45 so programmieren, daß sie die unterschiedlichsten Schuhmodelle in beliebiger Reihenfolge bearbeiten können. Gleiches gilt auch für die übrigen Maschinen 91, 46 und 47.

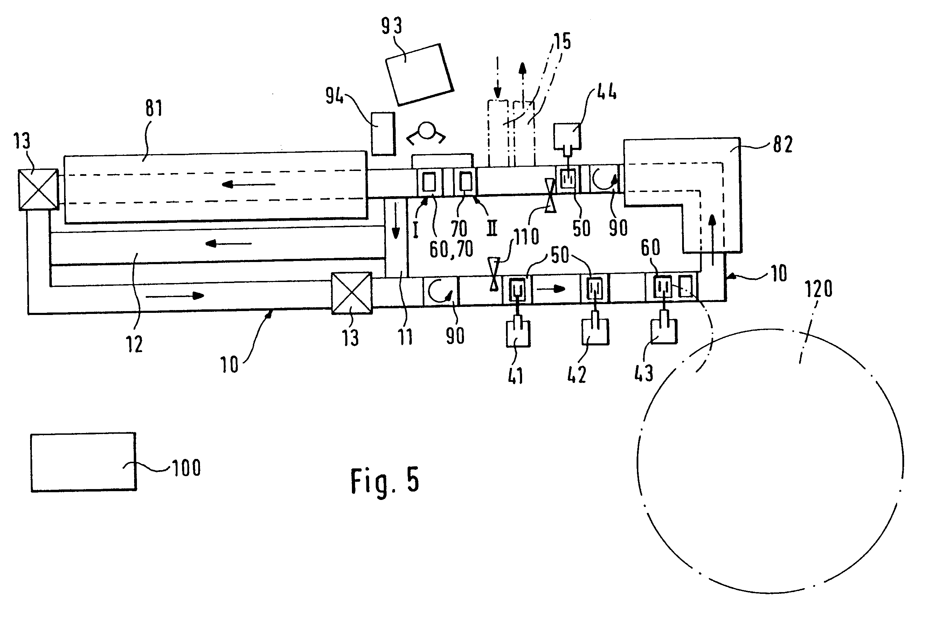

Fig. 5 zeigt schematisch eine Draufsicht auf eine weitere Transferstraße für die Schuhherstellung. Auch hier beginnt der Arbeitsablauf wieder bei dem mit der Position I gekennzeichneten Bearbeitungsplatz 60, 70, wo die in einem Zwischenlager 93 vorrätigen bzw. aus dem Dämpfgerät 94 kommenden Schuhschäfte eingeleistet werden. An dieser Stelle werden auch die Leisten gewechselt, wenn Schuhe anderer Größen gefertigt werden sollen.

Mit Hilfe der Förderstrecke 10 werden die Schuhe zunächst durch eine integrierte Stabilisierstation 81 transportiert, gelangen zu einer Drehstation 90, zu einer Bearbeitungsstation 50 mit einem Roboter 41 zum Rauhen der Abdichtkontur, zu einer weiteren Bearbeitungsstation 50 mit Roboter 42 zum Auftragen eines Haftvermittlers und schließlich zu einer Station 60 mit einem Manipulationsroboter 43. Dieser nimmt den Leisten mit aufgesetztem Schaft nach Lösen der Verbindung zur Förderplattform von der Förderstrecke 10 ab, übergibt ihn an eine rundlaufende Sohlengießmaschine 120 und setzt die Leisten mit den angegossenen Sohlen wieder auf die leere Förderplattform auf.

Anschließend durchläuft die Einheit aus Förderplattform, Leisten und Schuh eine Kühlstrecke 82, wird in einer Drehstation 90 gedreht; an einer Bearbeitungsstation 50 wird mit Hilfe eines Roboters 44 der Austrieb entfernt.

Abschließend wird der Schuh an der mit dem Bezugszeichen II gekennzeichneten letzten Bearbeitungsstation 70 ausgeleistet oder aber über eine Verbindungsstrecke 15 zu weiteren Arbeitsplätzen transportiert.

Auch hier versorgen Code-Leser 110 die diversen Maschinen und Roboter mit den erforderlichen Daten, während die Überwachung und Steuerung der Transferstraße von der übergeordneten Datenverarbeitungsanlage 100 erfolgt.

In die Förderstrecke 10 sind eine Kurzschlußstrecke 11, eine Umgehungsstrecke 12 sowie eine Räumstrecke mit zwei Senkrechtförderern 13 integriert, um den Betriebsablauf flexibel halten und etwaige Betriebsstockungen auffangen zu können.

## Patentansprüche

1. Transferstraße zur Verwendung in der Schuhindustrie, bestehend aus einer Förderstrecke (10) für Förderplattformen (20), an denen Schuhschäfte oder Schuhe tragende Zwickleisten (30) lösbar befestigt sind, aus einer Reihe von Maschinen (40) und Bearbeitungsstationen (50, 60, 70) entlang der Förderstrecke (10) sowie einer übergeordneten Datenverarbeitungsanlage (100) zur Steuerung derselben, wobei Bearbeitungsstationen (50) der ersten Art so eingerichtet sind, daß die Förderplattformen (20) angehalten und zur Förderstrecke (10) fixiert werden können, wobei Bearbeitungsstationen (60) der zweiten Art so eingerichtet sind, daß die Förderplattformen (20) angehalten und fixiert und Verbindungsklammern (26, 27) zwischen Förderplattform (20) und Leisten (30) gelöst bzw. befestigt werden können, wobei Bearbeitungsstationen (70) der dritten Art so eingerichtet sind, daß die Förderplattformen (20) angehalten und fixiert und die Leisten (30) mit heb- und senkbaren sowie öffen- und schließbaren Zangen (73) manipuliert werden können, und wobei an wenigstens einer Bearbeitungsstation (50, 60, 70) hebbare, senkbare und/oder schwenkbare Hebel (74) vorgesehen sind, mit deren Hilfe die Lage des Schuhschaftes bzw. Schuhs auf dem Leisten (30) veränderbar ist, dadurch gekennzeichnet, daß Übergabestationen (80) vorgesehen sind, die so eingerichtet sind, daß die Förderplattformen (20) mit Zwickleisten (30) und Schuhschäften bzw. Schuhen aus der Förderstrecke (10) ausgeschleust, zur Maschine (40) transportiert und wieder in die Förderstrecke (10) eingeschleust werden können, daß die Förderplattform (20) aus einer Trägerplatte (21) mit Justierbohrungen (29) und einer Reihe von Durchbrechungen (23) besteht, daß wenigstens zwei Verbindungsklammern (26, 27) vorgesehen sind, die mittels Federn (36) in Schließstellung gehalten werden, daß wenigstens ein Justierzapfen (25) vorgesehen ist, auf den der Leisten (30) aufsteckbar ist, und daß am Leisten (30) Halteplatten (33, 34) montiert sind, in die die Halteklauen der Verbindungsklammern (26, 27) eingreifen.

2. Transferstraße nach Anspruch 1, dadurch gekennzeichnet, daß in die Förderstrecke (10) integrierte Bearbeitungsstationen als Bearbeitungsstationen (80) der vierten Art vorgesehen sind.

3. Transferstraße nach Anspruch 1 oder 2, dadurch gekennzeichnet, daß an der Förderstrecke (10) wenigstens eine Einrichtung (90) angeordnet ist, um die Förderplattformen (20) um ihre Hochachse drehen zu können.

4. Transferstraße nach Anspruch 1, 2 oder 3, dadurch gekennzeichnet, daß an wenigstens einer der Bearbeitungsstationen (50) der ersten Art Einrichtungen (71) vorgesehen sind, die die Förderplattformen (20) anheben und gegen eine feste Halterung (11) pressen.

5. Transferstraße nach Anspruch 4, dadurch gekennzeichnet, daß Fixierstifte (71) vorgesehen sind, die in entsprechende Bohrungen (29) in den Förderplattformen (20) eingefahren werden.

6. Transferstraße nach Anspruche 1, dadurch gekennzeichnet, daß die Einrichtungen mittels Pneumatikzylinder (76, 77) betätigt sind.

7. Transferstraße nach einem der Ansprüche 1 bis 6, dadurch gekennzeichnet, daß die Förderstrecke (10) in mehrere Teilstrecken (11, 12, 14) unterteilt ist, die mit unterschiedlichen Geschwindigkeiten laufen.

8. Transferstraße nach einem der Ansprüche 1 bis 7, dadurch gekennzeichnet, daß die Förderstrecke (10) eine Umgehungsstrecke (12), eine Kurzschlußstrecke (11) und/oder eine Räumstrecke (13), z. B. mit Senkrechtförderer, besitzt.

9. Transferstraße nach einem der Ansprüche 1 bis 8, dadurch gekennzeichnet, daß die Förderstrecke (10) als Kettenförderer, Riemenförderer oder Rollenförderer ausgebildet ist.

10. Transferstraße nach Anspruch 9, dadurch gekennzeichnet, daß die Förderer nach dem Stauprinzip zur Pufferung der Förderplattformen (20) arbeiten.

11. Transferstraße nach Anspruch 9 oder 10, dadurch gekennzeichnet, daß die Ketten (19) und Förderplattformen (20) zwischen U-förmigen Profilschienen (18) laufen, gegen die die Förderplattformen (20) angehoben und angepreßt werden können.

12. Transferstraße nach einem der Ansprüche 1 bis 11, dadurch gekennzeichnet, daß Codeleser (110) vorgesehen sind und Förderplattform (20) und/oder Leisten (30) eine elektrisch bzw. optisch lesbare Codierung tragen.

13. Transferstraße nach Anspruch 1, dadurch gekennzeichnet, daß der Leisten (30) ein Scharnierleisten mit Spitzen- und Fersenstück (31, 32) ist und daß eine der Verbindungsklammern (27) den Spalt zwischen Spitzen- und Fersenstück (31, 32) übergreift.

14. Transferstraße nach Anspruch 1, dadurch gekennzeichnet, daß oberhalb der Halteplatte (33) eine Aussparung (35) im Fersenstück (32) vorgesehen ist, in die die Zange (73) eingreift.

## Claims

1. A transfer line for use in the shoe industry, comprising a conveyor section (10) for conveyor platforms (20) on which lasts (30) carrying shoe uppers or shoes are releasably secured, a series of machines (40) and operating stations (50, 60, 70) along the conveyor section (10) and also a superordinated data-processing unit (100) for the control thereof, wherein operating stations (50) of the first type are so arranged that the conveyor platforms (20) can be stopped and fixed in relation to the conveyor section (10), wherein operating stations (60) of the second type are so arranged that the conveyor platforms (20) can be stopped and fixed, and connecting clamps (26, 27) can be released or secured between the conveyor platform (20) and last (30), wherein operating stations (70) of the third type are so arranged that the conveyor platforms (20) can be stopped and fixed, and the lasts (30) can be handled with jaws (73) which can be raised and lowered and also opened and closed, and wherein on at least one of the operating stations (50, 60, 70) there are provided raisable, lowerable and/or pivotable levers (74) by means of which the position of the shoe upper or shoe on the last (30) can be varied, characterised in that transfer stations (80) are provided which are so arranged that the conveyor platforms (20) with lasts (30) and shoe uppers or shoes can be removed from the conveyor section (10), conveyed towards to the machine (40) and reintroduced into the conveyor section (10), in that the conveyor platform (20) comprises a carrier plate (21) with adjustment holes (29) and a series of openings (23), in that at least two connecting clamps (26, 27) are provided which are retained in a closed position by means of springs (36), in that at least one adjustment pin (25) on which the last (30) can be mounted, and in that retaining plates (33, 34) are provided on the last (30), the retaining claws of the connecting clamps (26, 27) engaging in said retaining plates.

2. A transfer line according to Claim 1, characterised in that operating stations integrated into the conveyor section (10) are provided as operating stations (80) of the fourth type.

3. A transfer line according to Claim 1 or 2, characterised in that at least one device (90) is disposed on the conveyor section (10) so as to enable the conveyor platforms (20) to be rotated about their vertical axis.

4. A transfer line according to Claim 1, 2 or 3, characterised in that on at least one of operating stations (50) of the first type there are provided devices (71) which raise the conveyor platforms (20) and press against a fixed mounting (11).

5. A transfer line according to Claim 4, characterised in that locating pins (71) are provided which are inserted into corresponding bores (29) in the conveyor platforms (20).

6. A transfer line according to Claim 1, characterised in that the devices are actuated by means of pneumatic cylinders (76, 77).

7. A transfer line according to any one of Claims 1 to 6, characterised in that the conveyor section (10) is divided into several partial sections (11, 12, 14) which operate at different speeds.

8. A transfer line according to any one of Claims 1 to 7, characterised in that the conveyor section (10) has a bypass section (12), a short-circuit section (11) and/or a removal section (13), e.g. with vertical conveyors.

9. A transfer line according to any one of Claims 1 to 8, characterised in that the conveyor section (10) is in the form of a chain conyeyor, a belt conveyor or roller conveyor.

10. A transfer line according to Claim 9, characterised in that the conveyors operate in accordance with the accumulation principle for cushioning the conveyor platforms (20).

11. A transfer line according to Claim 9 or 10, characterised in that the chains (19) and conveyor platforms (20) run between U-shaped section rails (18), against which the conveyor platforms (20) are raised and pressed.

12. A transfer line according to any one of Claims 1 to 11, characterised in that code readers (110) are provided and the conveyor platform (20) and/or last (30) have an electrically and/or optically readable coding.

13. A transfer line according to Claim 1, characterised in that the last (30) is a hinged last with toe and heel parts (31, 32), and in that one of the connecting clamps (27) overlaps the gap between the toe and heel parts (31, 32).

14. A transfer line according to Claim 1, characterised in that above the retaining plate (33) a recess (35) is provided in the heel part (32), into which the jaw (73) engages.

## Revendications

1. Ligne de transfert pour l'utilisation dans l'industrie de la chaussure, composée d'une section de transport (10) pour des plates-formes de transport (20), sur lesquelles sont fixés mobiles des embauchoirs à monter (30) supportant des empeignes de chaussures ou des chaussures, à partir d'une rangée de machines (40) et de postes d'usinage (50, 60, 70) disposés le long de la section de transport (10), ainsi qu'à partir d'un dispositif de traitement des données (100) hiérarchiquement supérieur pour commander la ligne, les postes d'usinage (50) du premier type étant équipés de telle sorte que les plates-formes de transport (20) peuvent être stoppées et fixées sur la section de transport (10), les postes d'usinage (60) du deuxième type étant équipés de telle sorte que les plates-formes de transport (20) peuvent être stoppées et fixées et que des pinces de liaison (26, 27) situées entre la plate-forme (20) et les embauchoirs (30) peuvent être désolidarisées ou fixées, les postes d'usinage (70) du troisième type étant équipés de telle sorte que les plates-formes (20) sont stoppées et fixées et que les embauchoirs (30) peuvent être manipulés avec des pinces (73) tant levables et abaissables que pouvant s'ouvrir ou se refermer, et au moins un poste d'usinage (50, 60, 70) étant pourvu de leviers (74) levables, abaissables et/ou pivotants, avec l'aide desquels la position de l'empeigne, ou de la chaussure sur l'embauchoir (30) peut être variée, caractérisé en ce que des postes de transfert (80) sont prévus, équipés de telle sorte que les plates-formes de transport (20), avec les embauchoirs à monter (30) et les empeignes de chaussures, ou les chaussures, sont retirées de la section de transport (10), transportées jusqu'à la machine (40) et de nouveau replacées sur la section de transport (10), que la plate-forme de transport (20) est composée d'une plaque-support (21) avec des perçages d'ajustage (29) et une rangée de passages (23), en ce qu'au moins deux pinces de liaison (26, 27) sont prévues, maintenues en position de fermeture au moyen de ressorts (36), en qu'au moins un tourillon d'ajustage (25) est prévu, sur lequel l'embauchoir (30) peut être placé, et que sur l'embauchoir (30) sont montées des plaques de maintien (33, 34) dans lesquelles les griffes de maintien des pinces de liaison (26, 27) s'engagent.

2. Ligne de transfert selon la revendication 1, caractérisé en ce que des postes de façonnage intégrés sont prévus dans la section de transport (10), en tant que postes d'usinage (80) du quatrième type.

3. Ligne de transfert selon la revendication 1 ou 2, caractérisé en ce que, sur la section de transport (10), est disposé au moins un dispositif (90), afin de pouvoir faire tourner les plates-formes de transport (20) autour de leur axe vertical.

4. Ligne de transfert selon la revendication 1, 2 ou 3, caractérisé en ce que, sur au moins un des postes d'usinage (50) du premier type, des dispositifs (71) sont prévus, qui lèvent les plates-formes de transport (20) et les pressent contre une attache (11) fixe.

5. Ligne de transfert selon la revendication 4, caractérisé en ce que des broches de fixation (71) sont prévues, qui sont insérées dans des perçages (29) correspondants ménagés dans les plates-formes de transport (20).

6. Ligne de transfert selon la revendication 1, caractérisé en ce que les dispositifs sont actionnés au moyen de vérins pneumatiques (76, 77).

7. Ligne de transfert selon l'une des revendications 1 à 6, caractérisé en ce que la section de transport (10) est subdivisée en plusieurs sections partielles (11, 12, 14) qui défilent à des vitesses différentes.

8. Ligne de transfert selon l'une des revendications 1 à 7, caractérisé en ce que la section de transport (10) a une section de dérivation (12), une section de court-circuit (11) et/ou une section d'évacuation (13), par exemple avec un transporteur vertical.

9. Ligne de transfert selon l'une des revendications 1 à 8, caractérisé en ce que la section de transport (10) est réalisée sous forme de transporteur à chaînes, de transporteur à courroies ou de transporteur à rouleaux.

10. Ligne de transfert selon la revendication 9, caractérisé en ce que les transporteurs travaillent selon le principe de retenue afin de faire office de tampon pour les plates-formes de transport (20).

11. Ligne de transfert selon la revendication 9 ou 10, caractérisé en ce que les chaînes (19) et les plates-formes de transport (20) défilent entre les glissières profilées (18) en U, contre lesquelles les plates-formes de transport (20) peuvent être levées et pressées.

12. Ligne de transfert selon l'une des revendications 1 à 11, caractérisé en ce que des lecteurs de codes (110) sont prévus et la plate-forme de transport (20) et/ou l'embauchoir (30) portent un code lisible électriquement ou optiquement.

13. Ligne de transfert selon la revendication 1, caractérisé en ce que l'embauchoir (30) est un embauchoir à charnière avec un morceau de pointe et un morceau de talon (31, 32) et que l'une des pinces de liaison (27) ponte l'interstice situé entre le morceau de pointe et le morceau de talon (31, 32).

14. Ligne de transfert selon la revendication 1, caractérisé en ce qu'un évidement (35), dans lequel la pince (73) s'engage est prévu dans le morceau de pointe (32), au-dessus de la plaque de maintien (33),
